# EUROPEAN PATENT APPLICATION

(11) **EP 0 810 461 A1**
(43) Date of publication of application: **03.12.1997**
(21) Application number: 96905089.7
(22) Date of filing: 14.02.1996
(51) Int. Cl.: G02C 7/10, G02C 11/02

(54) **LENSES FOR HOLOGRAPHIC SPECTACLES**

(30) Priority: 16.02.1995 RU 95102280
(71) Applicant: Gulanyan, Emin Khachikovich, Moscow 107078 (RU); Turkov, Jury Grigorievich, Moscow 121471 (RU)
(72) Inventor: Gulanyan, Emin Khachikovich, Moscow 107078 (RU); Turkov, Jury Grigorievich, Moscow 121471 (RU)
(74) Representative: W.P. Thompson & Co.
(86) International application number: RU9600036
(87) International publication number: WO9625686

(57) **Abstract**

Lenses for holographic spectacles comprise an optically transparent base (1) on the interior surface of which, facing the wearer, a layer (2) of a recording material is applied, at least one three-dimensional hologram being recorded in the material. The layer (2) is made of a material transparent in the that spectral range, wherein the diffraction efficiency of the hologram is maximum. Located behind the hologram layer (2) (as viewed from the wearer's side) is at least one compensation layer (3) made of a selective absorbent having higher absorption of radiation in the aforementioned spectral range and maximum transmittance of radiation outside that range. To establish an integrated construction the mentioned elements of the lenses are joined together using lens cement. The invention significantly reduces three-dimensional modulation of the radiation passing through the lenses and resultant from the holographic image, thereby reducing color contrast over the lens aperture.

## Description

### Technical Field

The invention relates in general to optics and more specifically to construction of lenses for sun glasses, as well as for decorative, advertisement, or club-house holographic spectacles, whose effect is based on a holographic image appearing on illuminating the lenses by a natural or artificial light. The invention is aimed at reducing color contrast over the aperture of the lenses in transmitted light in case of an increased brightness of the holographic image, as well as for extending the effective service period within which the image retains its brightness, and for improving shock-resistant properties of such lenses, which is important for protecting the wearer's eyes against injury in case of an accidental damage to the lenses.

### Background Art

A decorative effect is a substantial characteristic of holographic spectacles used in advertisement and ornamental purposes; it is the higher the greater portion of luminous radiation incident on their lenses is utilized for producing a holographic image, said portion depending on the diffraction efficiency of the hologram and may be equal to 50-70% (cf. USSR Inventor's Certificate # 1,323,997, IPC⁴ G02C 7/10).

With a view to increasing the brightness and expressiveness of a holographic image use is made of holograms of objects rich in details and tints. However, local diffraction efficiency of holograms of such objects is considerably variable over the aperture of lenses, which in turn results in spatial modulation of the light transmitted through the lenses which appear as color spots offering discomfort for the wearer and causing tiresomeness and visual fatigue. To reduce color contrast between said spots is practicable in the known constructions of lenses only due to a positive reduction of diffraction efficiency of holograms which is however inadmissible as affecting brightness and expressiveness of a holographic image. Affected brightness and expressiveness of such an image in said constructions is also due to the fact that a hologram-carrying layer therein, apart from forming an image, also attenuates the intensity of the transmitted light.

Lenses for holographic sun glasses are known (cf. USSR Inventor's Certificate # 1,778,741, IPC⁵ G02C 7/10) to comprise eyepieces coated with thick-layer photoemulsion, wherein a three-dimensional reflectance hologram has been recorded in opposing beams. Transmittance of the photoemulsion layer is determined by appropriately selected exposure time and development conditions. Protection against bright luminous radiation in said lenses is provided both due to reflection from local reflection and absorption centers formed in said layer during hologram recording, and due to increased optical density (i.e., reduced transparency) of the material resultant from photochemical processing of the exposed photoemulsion.

However, a homogeneous attenuation of transmitted radiation in the photoemulsion layer fails to reduce spatial modulation of said radiation which offers discomfort for the wearer. Moreover, a diffracting radiation forming a holographic image is also attenuated along spatial modulation of said radiation, this being due to absorption of said radiation by both the reflection centers and the material itself of the photoemulsion layer. As a result, the brightness of the image is reduced and it becomes relatively dull and blurred, thereby getting less expressive.

One more prior-art lenses for decorative sun glasses are known (cf. USSR Patent # 1,761,001, IPC⁵ G02C 7/10, 11/02) to comprise an optically transparent base used as a substrate and having its interior surface facing towards the wearer, coated with a partly reflecting and partly transmitting layer of a holographic emulsion, wherein at least one three-dimensional hologram is photographically recorded either in opposite light beams or using a reference beam incident on the emulsion layer at an angle of 20 to 40^{o}, with the object-modulated beam directed from the back side of the layer after having been reflected from the object being recorded. Thus, the hologram established an image which can be localized in the plane of the substrate either on the wearer's side or on the observer's side.

The lenses may also comprise a protective element appearing as a lacquer coating or a deposited abrasion-resistant layer, or else a glass layer aimed at further attenuating bright sunlight to some extent. However, such a technical solution of the problem is a merely auxiliary one because the protective element is not mentioned in the claims for patent. Therefore principal attenuation of the luminous flux is effected in the layer of holographic emulsion both due to reflection from local reflection and absorption centers formed in said layer during hologram recording, and due to partial transparency of the material the emulsion is made of. Such a layer attenuates homogeneously transmitted radiation within the whole visible spectral range, including the spectral range, wherein the diffraction efficiency of the hologram is maximum. Under such conditions use of said protective element fails to improve the situation because of its having no spectral selectivity as well.

Thus, provision of a layer carrying a hologram, with or without a protective layer, fails to reduce color contrast over the aperture of lenses, which arises in transmitted radiation due to spatial modulation thereof resulting from forming a holographic image and hence fails to reduce discomfort for the wearer. Like in the analog discussed before, the aim of reducing color contrast in the known lenses is in conflict with the principal purpose of decorative holographic spectacles, viz, to draw one's attention thereto, which is unattainable without increasing the brightness and expressiveness of the image formed in the spectacles.

Moreover, the situation is aggravated by the fact that the brightness of an image formed in the holographic layer is affected since said layer performs the function of attenuating the intensity of transmitted radiation in order to protect the wearer's eyes. Thus, combination of the function of forming an image and that of protecting against a bright luminous radiation in the same layer makes it basically impossible to use for said layer a completely transparent material rather than a partly transparent one.

Furthermore, the lenses under discussion make no provision for means protecting the wearer's eyes in case of an accidental damage to the lenses, while a possibility of imparting the appropriate properties due to the use of a protective element is left beyond the specification of invention.

### Disclosure of the Invention

It follows from the aforementioned prior-art analysis that the principal object of the present invention is to reduce color contrast over the aperture of lenses in transmitted light and to increase the brightness of a holographic image.

Further objects of the present invention are to extend the effective service period within which the image retains its brightness, and also to improve shock-resistant properties of such lenses in order to protect the wearer's eyes against injury in case of an accidental damage to the lenses.

The foregoing objects are accomplished due to the fact that in lenses for holographic spectacles, comprising an optically transparent base having one of its surfaces provided with a layer, wherein at least three-dimensional hologram is recorded, according to the invention, said layer is made of a material transparent in a spectral range, wherein the diffraction efficiency of the hologram is maximum, and at least one compensation layer is provided behind the hologram-carrying layer (towards the wearer), said layer being made of a selectively absorbing material having a maximum spectral transmittance outside said spectral range and serving for reducing color contrast over the lens aperture in transmitted light, and the brightness of the holographic image resultant from illumination of said lenses is increased.

The essence of the invention is based on the properties of a three-dimensional hologram which is recorded in a narrow spectral range, using coherent light beams that establish local centers in a layer of recording material, said centers differing from the rest of the material in their optical properties and forming a three-dimensional diffraction structure. When illuminating the hologram layer with a broad-band radiation of a natural or artificial origin, the hologram exhibits its maximum diffraction efficiency in a respective narrow spectral range. That is why the spatial modulation of a radiation that has been transmitted through such a layer is maximum in said spectral range, whereas the radiation of other wavelengths remains virtually unmodulated.

The conception of the invention consists in a relative attenuation of spectral components of a transmitted radiation in a spectral range corresponding to a maximum hologram diffraction efficiency, i.e., of just those components which are responsible for initiation of spatial modulation of the radiation perceived by the wearer's eye as color spots. This renders it possible to diminish color contrast between the spots over the aperture of lenses and thus to accomplish the object of the invention.

It follows from the prior-art analysis that the object itself of the invention has been proposed by the authors for the first time, and its accomplishing proves to be nontraditional and inconsistent with a conventionally established practice of a spectrally homogeneous attenuation of radiation by the hologram layer itself. This in turn gives evidence of unobviousness of the proposed solution, involving use of a compensation layer made of a selectively absorbing material featuring maximum transmittance outside said spectral range and, e.g., minimum transmittance within said spectral range. This is also evidenced by the fact that attenuation of radiation by the compensation layer is carried out just by its absorption rather than by reflection, a feature that contributes to the best conditions for viewing a holographic image, since it eliminates a radiation of the same color from the background.

It is particularly remarkable that the compensation layer may be shaped most diversely, e.g., as a plate from a material absorbing radiation in a specified spectral range. In an alternative embodiment said layer may be made of a lens cement which additionally contains an absorbent of radiation in a specified spectral range. The compensation layer may be additionally responsible for protecting the wearer's eyes against a bright light provided that said layer is made of a material which is capable of partially absorbing radiation in the rest of the visible spectrum outside said spectral range. In said and further embodiments of the invention the compensation layer has an inhomogeneous absorption spectrum with a maximum spectral transmittance lying outside said spectral range. To select the material of the compensation layer as for the aforementioned optical properties, use can be made of published tables and atlases of absorption spectra.

It is of paramount importance that apart from a direct realization of the conception of the present invention, use of a compensation layer provides also an independent optimization of optical properties of the hologram layer, whereby the latter may be made of a material transparent in said spectral range. In this instance the radiation that forms a holographic image is not absorbed by the material itself of the hologram layer so that a maximum possible brightness of the image (other things being equal) can be obtained. Moreover, the holographic image becomes in this case sharper and well-defined (due to better reproduction of details and tints of the recorded object), which makes the image very expressive, thus attracting attention of the surrounding people to the wearer of spectacles.

Further capabilities as to increasing the image brightness are provided when not only the material of the hologram layer but also the local centers therein established during hologram recording do not absorb radiation in said spectral range. Such centers (e.g., local changes in the refractive index of bichromated gelatin) differ in their optical properties from reflection and absorption centers which form the structure of reflectance holograms in the aforementioned analogs. That is why use of three-dimensional holograms established by such absorption-free local centers and called "scattering holograms" by us gives an additional increase in image brightness compared with reflectance holograms.

Thus, provision of a compensation layer makes it possible to select not only the material of the layer for hologram recording but also a more preferred type thereof (that is, a scattering hologram) in order to optimize brightness characteristics of a holographic image.

For the same reasons it is expedient that, for optimizing the viewing of an image by eliminating reflection glares, the base be provided with an antireflection coating on its exterior (relative to the wearer) surface, aimed at diminishing loss of radiation at the base-atmosphere interface.

It is favorable that the antireflection coating be applied also to the wearer-facing surface of the compensation layer (or of the last one if use is made of a few such layers), or else to the surface of the substrate made of an optically transparent material in the form of, e.g., a plate. In all cases such a coating is applied to the surface of an extreme construction element of lenses, whereby said surface is at the same time a corresponding surface of said lenses that faces towards the wearer. When using holographic spectacles as decorative ones indoors (e.g., in a club-house) provided with a plurality spaced-apart illumination sources, such a coating contributes to eliminating glares of reflection of said sources from the exterior lens surface, thus preventing formation of a ghost holographic image interfering with viewing the hologram.

For tinting a holographic image (especially a monochrome one) by selecting a background color tint outside said spectral range, it is expedient that the compensation layer have a coating on one of its surfaces that can partly reflect the light of a required color tint. For example, when a maximum diffraction efficiency of the hologram falls within a spectral range in the green region of the visible spectrum, it is one of the yellow tints that is most preferable for hologram tinting.

Admittedly, all the foregoing which concerns the essence of the invention refers equally to embodiments of the invention when using two or more holograms in lenses. When all such holograms exhibit diffraction efficiency in a single spectral range, it is favorable that all of them be recorded at different angles of incidence of the reference beam which lie in sequentially arranged angular intervals covering a preset angular range, e.g., from 40.5 to 80 degrees with respect to the normal to the lens surface. This feature extends displaying capabilities of lenses of decorative and advertisement holographic spectacles, because of ability to show to the viewer changes in the same holographic image, thus drawing more attention thereto. Though in this case to have a single compensation layer is quite enough to attain the aforementioned effects, it is possible to apply more than one such layer, e.g., in order to minimize color contrast over the lens aperture. It is quite understandable that both the range of angles and the order of recording holograms therein may vary depending on the required decorative or advertising effect.

It is expedient for obtaining a multicolor holographic image of an object that the holograms of its individual fragments be recorded in the same range of angles (e.g., in opposite beams) but in different spectral ranges. In this case it may prove to be preferable, for technological reasons, using two or more compensation layers rather than a single one in order to reduce color contrast over the lens aperture within the respective spectral ranges.

An analysis into the essence of the invention and of various embodiments thereof demonstrates that the invention allows for a wide variety of properties and types of realization of diverse construction elements of lenses, which is a very valuable feature enabling one to select optimum technological approach and construction arrangement suitable accomplishing further objects of the invention.

An optically transparent base may be made of a polymer material used in making lenses of conventional nonholographic spectacles, or from soda-lime glass. For convenience of wearers with some deviations from normal eyesight, the base may be shaped as an eyesight correcting lens.

Another embodiment of the invention is practicable for such wearers, i.e., with the base shaped as a flat plate, while shaped as an eyesight correcting lens is the substrate of the compensation layer which faces the wearer's side and is made of an optically transparent material. In such an embodiment it is preferable that the compensation layer be made of a lens cement applied to the substrate and further containing an absorbent of radiation in said spectral range. The lens cement integrates the eyesight correcting lens with the hologram layer applied to the interior base surface facing the wearer, as a substrate, into a single construction possessing a number of advantages. The hologram layer therein is isolated from the surrounding medium, which substantially reduces the rate of degradation of the properties of said layer and contributes to extending the effective service period within which the holographic image retains its brightness and expressiveness. On the other hand, from the mechanical standpoint said construction is similar to that of the triplex-type, namely, when damaged due to, e.g., a heavy impact the lenses are liable but to crack rather than to break into pieces, which adds to safety of the wearer's eyes.

It is noteworthy that some other variants of accomplishing said further objects of the invention. As has been mentioned before, the compensation layer may be entrusted with protecting the wearer's eyes against a bright light. Another solution of the problem may be applying to the compensation layer a coating capable of partially absorbing radiation in the rest of the visible spectrum outside said spectral range.

### Brief Description of the Drawings

In what follows the present invention is explained in the disclosure of exemplary embodiments thereof given by way of illustration to be taken in conjunction with the accompanying drawings, wherein:
FIGS.1-8 illustrate cross-sectional views of constructions of the lenses for aforementioned and other embodiments of the invention, wherein the following Reference Numerals are used to denote the construction components:
   1 - base; 2 - hologram layer; 3 - compensation layer; 4 - compensation layer substrate; 5 - layer of lens cement; 6 - antireflection coating; 7 - hermetically sealing layer; 8 - partially reflecting coating;
FIG.9 presents tinted images of the aperture of a holographic lens as viewed from the wearer's side, without (left view) and with (right view) a compensation layer.

### Best Method of Carrying Out the Invention

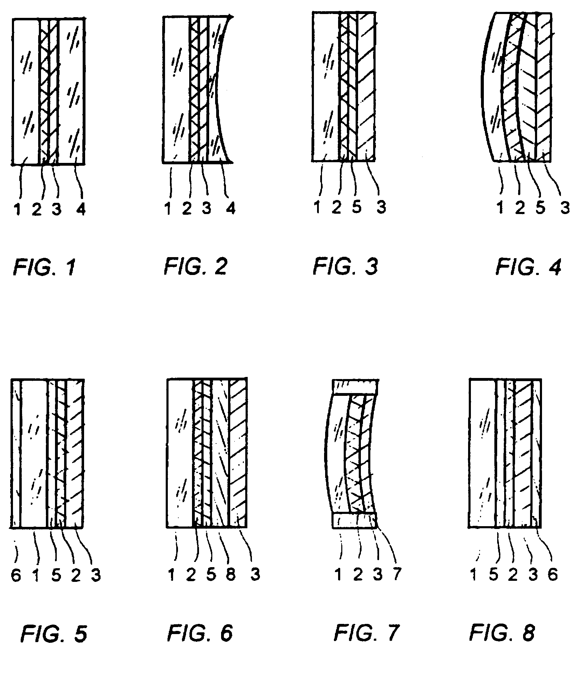

To promote understanding of the essence of the present invention, given below are the results of mathematical modeling of its specific embodiment presented in FIG.3.

The proposed lenses for holographic spectacles comprise an optically transparent base 1 made of soda-lime glass and shaped as a 1.3 mm thick plate whose interior surface facing the wearer serves as a substrate carrying a layer 2 of a photorecording material, that is, bichromated gelatin, applied in a layer 0.01 mm thick, wherein a three-dimensional scattering hologram is recorded. Adopted as the spectral transmittance of the hologram layer 2 are experimental values of said transmittance obtained on the portions of lenses having a minimum diffraction efficiency. The value of the spectral transmittance equals 74% on a wavelength of 560 nm, so that the layer 2 is adequately transparent. A maximum diffraction efficiency of the hologram is attained in a spectral range 20 nm wide with the center on said wavelength. Located behind the layer 2 as viewed from the wearer is a compensation layer 3 joined together with the layer 2 by a lens cement 5. The layer 3 is shaped as a flat plate so as to provide an increased radiation absorption in this spectral range in the green region of the spectrum, and maximum transmittance outside said spectral range. Relationship between spectral transmittance of the compensation layer 3 and radiation wavelength is tabulated below.

| | | | | | | | | |
|---|---|---|---|---|---|---|---|---|
| Wavelength, nm | <520 | 530 | 540 | 550 | 560 | 570 | 580 | >590 |
| Transmittance, % | 100 | 76.1 | 10.9 | 16.3 | 21.7 | 50.0 | 86.9 | 100 |

It is against the results of mathematical modeling that there are determined the lens luminous transmittance, the chromatic coordinates of the daylight radiation transmitted through the lens (with the standard source D65), and changes of the values of said quantities for the lens portions exhibiting maximum and minimum diffraction efficiency (which are assumed to be 70% and 0.1%, respectively).

In this case account is made both for presence and absence of the compensation layer 3 in the construction of the holographic lens involved.

With the lens construction devoid of a compensation layer the following values of the aforementioned quantities are obtained:
(a) For lens portions with minimum diffraction efficiency:
   - lens luminous transmittance K = 72.4%;
   - chromatic coordinate X = 0.340;
   - chromatic coordinate Y = 0.358;
(b) For lens portions with maximum diffraction efficiency:
   - lens luminous transmittance K = 62.3%;
   - chromatic coordinate X = 0.340;
   - chromatic coordinate Y = 0.335.

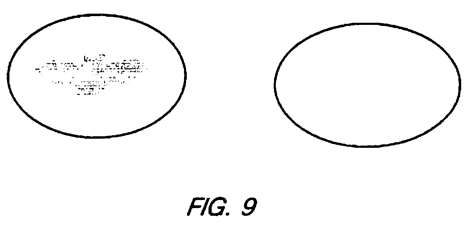

A change in the chromatic coordinate Y by 0.023 within the lens aperture is rather significant. Such a spatial modulation of the spectrum of radiation transmitted through the lens is perceived by the wearer as sharply defined violet-purple spots (at places where the diffraction efficiency is maximum), seen against a light-gray background (wherever the diffraction efficiency is minimum). For the sake of better clarity, the left portion of FIG.9 shows the aperture of a holographic lens as viewed from the wearer's side, whereon a noise is clearly seen appearing as a color spot in the form of the recorded image (the outline of a bat in this particular case).

With the lens construction making use of a compensation layer the following values of the aforementioned quantities are obtained:
(a) For lens portions with minimum diffraction efficiency:
   - lens luminous transmittance K = 49.4%;
   - chromatic coordinate X = 0.342;
   - chromatic coordinate Y = 0.296;
(b) For lens portions with maximum diffraction efficiency:
   - lens luminous transmittance K = 47.5%;
   - chromatic coordinate X = 0.342;
   - chromatic coordinate Y = 0.295.

As evidenced from the foregoing data, spatial changes of the chromatic coordinate Y are as small as 0.001 within the lens aperture. Such a modulation is no longer perceptible by the wearer' eye, the more so as a general background of the aperture coloration is shifted towards the purple color against which its small changes get less evident (as shown in the left portion of FIG.9), this being due to a selective nature of radiation absorption by the compensation layer 3.

Thus, use of the compensation layer 3 having the spectral characteristics mentioned before makes it possible to reduce to a considerable extent, and in some instances to completely suppress spatial modulation of the radiation transmitted through the lenses, which results from formation of a holographic image. Moreover, it becomes possible to increase the brightness of the image due to higher diffraction efficiency of the hologram, recording a scattering hologram which attenuates to a lesser extent the radiation diffracted thereon, and use of a recording material having maximum transparency after recording a hologram thereon. Neither the analog nor the prototype of the present invention possesses the aforementioned capabilities.

According to an embodiment of the invention present in FIG.1, the hologram layer 2 is applied to the wearer-facing interior surface of the base 1 shaped as a flat plate serving as a substrate in a way similar to that shown in FIG.3. As distinct from the latter, the compensation layer 3 of FIG.1 is made of lens cement which further contains an absorbent of radiation in said spectral range. The compensation layer 3 is applied to the hologram layer 2 and has a substrate 4 made of an optically transparent material and shaped as a flat plate facing towards the wearer. The layer 3 joins the elements of lenses into a single construction similarly to the lens cement 5 in the embodiment of FIG.3.

FIG.2 illustrates an embodiment of the invention differing from that present in FIG.1 solely in that the substrate 4 of the compensation layer is shaped as an eyesight correcting lens.

An embodiment shown in FIG.4 differs from that of FIG.3 in that the base 1 is shaped as an eyesight correcting lens, otherwise being the same as the embodiment of FIG.3.

As distinguished from all other embodiments of the present invention, in the ones illustrated in FIGS.5 and 8 the hologram layer 2 is applied to the compensation layer 3 serving as a substrate. Like the embodiment of FIG.3 the layer 3 is shaped as a flat plate made of a material absorbing radiation in said spectral range. An antireflection coating 6 for said spectral range is applied to the exterior surface of the base 1 (FIG.5) and to the wearer-facing surface of the compensation layer 3 (FIG.8).

FIG.6 presents an embodiment of the invention differing from that shown in FIG.3 solely in that the compensation layer 3 has a partially reflecting coating 8 aimed at tinting the holographic image.

In an embodiment of the invention present in FIG.7 the base 1 and the compensation layer 3 made of a material absorbing radiation in said spectral range, are shaped as a curved plate, while the hologram layer 2 is applied to the interior surface of the base 1 serving as a substrate. To establish an integral construction said elements of lenses are jointed together with the aid of a binding sealant layer 7 of lens cement applied to the end faces of said elements.

The bonded-together lenses are trimmed and turned to suit the shape of the aperture of the spectacles frame (faceting) and are then fitted in an appropriate frame. Thus, the lenses are ready for use.

A number of specimen lenses for holographic spectacles were made using the proposed invention, said lenses having a diffraction efficiency of 50% and a maximum luminous transmittance of 40% and offering no visually perceptible spatial modulation of radiation appearing as color spots.

The herein-proposed lenses for holographic spectacles function as follows. A natural or artificial luminous radiation is incident on the base 1 and, while passing therethrough and through the layer 2 carrying a scattering hologram, is diffracted without absorption at scattering centers (i.e., local changes in refractive index) distributed over said layer. The radiation back-scattered by said centers produces a bright holographic image (e.g., that of a bat) within a narrow spectral range in the green region of the visible spectrum which is seen by the wearer in the aperture of both lenses of the spectacles. The radiation of said spectral range that has transmitted through the layer 2 is absorbed to a greatest extent by the compensation layer 3, whereas the radiation outside said spectral range in the rest of the visible spectrum is absorbed by the layer 3 to a lower degree so that the wearer can see the surroundings through the lenses in purple-brown tints without interfering color spots resulting from spatial modulation of radiation which should have been seen in the absence of the compensation layer 3.

The exemplary embodiments stated before are by no means exhaustive. Thus, for instance, there are practicable embodiments, wherein the base performs further functions, which enables one to simplify the construction of spectacles. For example, when the base is transparent to the rest of the visible spectrum outside said spectral range and contains an absorbent of radiation therein, said base serves also as the compensation layer. In this case the hologram layer may be applied to the exterior (as viewed from the wearer) surface of the base which serves in this case as a substrate. According to another embodiment of the invention, it is expedient that with a view to enhancing wearer's adaptation to abrupt and frequent changes in illumination intensity, e.g., when changing over from light to shadow, the compensation layer be isolated from the hologram layer by an additional layer made of a photochromic material capable of changing optical transmission over the entire lens aperture depending on illumination intensity.

The foregoing and further exemplary embodiments of the present invention can by no means be regarded as limiting the proposed invention, but are to be interpreted as illustrative to promote understanding of its essence which is set forth to a greatest extent in the claims that follow.

### Industrial Applicability

The invention can find application for making decorative, advertisement, club-house or sun holographic spectacles. In carrying into effect all the embodiments described before use is made of known elements, materials, and substances whose production is carried out on industrial scale. Techniques of applying layers to various substrates, inserting various substances therein, as well as hologram recording techniques are a matter of knowledge to those skilled in respective fields of engineering and technology.

## Claims

1. Lenses for holographic spectacles, comprising an optically transparent base (1) having one of its surfaces provided with a layer (2), wherein at least one three-dimensional hologram is recorded, CHARACTERIZED in that said layer (2) is made of a material transparent in a spectral range, wherein the diffraction efficiency of the hologram is maximum, and at least one compensation layer (3) is provided behind the hologram layer (2) (towards the wearer), said layer (3) being made of a selectively absorbing material having a maximum spectral transmittance outside said spectral range and serving for reducing color contrast over the lens aperture in transmitted light, and the brightness of the holographic image resultant from illumination of said lenses is increased.

2. Lenses for holographic spectacles as set forth in claim 1, CHARACTERIZED in that the base (1) is provided with an antireflection coating (6) on its exterior (relative to the wearer) surface intended in particular for said spectral range.

3. Lenses for holographic spectacles as set forth in claims 1, 2, CHARACTERIZED in that the base (1) is shaped as a plate or an eyesight correcting lens.

4. Lenses for holographic spectacles as set forth in claim 1, CHARACTERIZED in that used as the material of said hologram layer (2) is either bichromated gelatin or a photopolymer.

5. Lenses for holographic spectacles as set forth in claim 1, CHARACTERIZED in that said hologram layer (2) is hermetically sealed between the base (1) and the compensation layer (3) with the aid of a layer (7) of a binding sealant, e.g., lens cement applied to the end faces of the lenses.

6. Lenses for holographic spectacles as set forth in claim 1, CHARACTERIZED in that said hologram layer (2) is located on the interior surface of the base (1) facing the wearer and applied thereto as it were a substrate.

7. Lenses for holographic spectacles as set forth in claim 6, CHARACTERIZED in that the compensation layer (3) is applied to the hologram layer (2) and is made of lens cement which further comprises an absorbent of the radiation in said spectral range.

8. Lenses for holographic spectacles as set forth in claims 1, 7, CHARACTERIZED in that the compensation layer (3) has a substrate (4) made of an optically transparent material and facing the wearer.

9. Lenses for holographic spectacles as set forth in claim 8, CHARACTERIZED in that the substrate (4) of the compensation layer (3) is shaped as an eyesight correction lens.

10. Lenses for holographic spectacles as set forth in claims 8, 9, CHARACTERIZED in that an antireflection coating aimed, in particular, to said spectral range, is applied to the wearer-facing surface of the substrate (4) of the compensation layer (3), said surface being at the same time a respective surface of the lenses.

11. Lenses for holographic spectacles as set forth in claim 1, CHARACTERIZED in that the compensation layer (3) is shaped as a plate made of material absorbing the radiation in said spectral range.

12. Lenses for holographic spectacles as set forth in claim 11, CHARACTERIZED in that said hologram layer (2) is applied to said compensation layer (3) as it were a substrate.

13. Lenses for holographic spectacles as set forth in claims 11, 12, CHARACTERIZED in that an antireflection coating (6) intended, in particular, for said spectral range is applied to the wearer-facing surface of the compensation layer (3) which is at the same time the respective surface of the lenses.

14. Lenses for holographic spectacles as set forth in claims 1, 11, CHARACTERIZED in that said compensation layer (3) has a coating (8) partly reflecting the radiation outside said spectral range applied to one of the surfaces of said layer (3).

15. Lenses for holographic spectacles as set forth in claim 1, CHARACTERIZED in that the three-dimensional hologram is of the scattering one.

16. Lenses for holographic spectacles as set forth in claims 1, 15, CHARACTERIZED in that when using two or more holograms they are recorded at different angles of incidence of the reference beam which lie in sequentially arranged angular intervals covering a preset angular range, e.g., from 40.5 to 80 degrees.

17. Lenses for holographic spectacles as set forth in claims 1, 16, CHARACTERIZED in that when recording two or more holograms they exhibit a maximum diffraction efficiency in the same spectral range.

18. Lenses for holographic spectacles as set forth in claims 1, 16, CHARACTERIZED in that when recording two or more holograms at least two of them exhibit a maximum diffraction efficiency in different spectral ranges.

19. Lenses for holographic spectacles as set forth in claim 1, CHARACTERIZED in that the base (1) is transparent outside said spectral range and contains an absorbent of the radiation in said spectral range, thus serving simultaneously as a compensation layer, and that said hologram layer (2) is applied to the exterior (as viewed from the wearer's side) surface of the base (1) as it were a substrate.

20. Lenses for holographic spectacles as set forth in claim 1, CHARACTERIZED in that the compensation layer (3) is isolated from the hologram layer (2) by a layer of a photochromic material capable of changing optical transmission over the entire lens aperture depending on illumination intensity.
